# FASCICULE DE BREVET EUROPEEN

(11) **EP 1 561 708 B1**
(45) Date de publication et mention de la délivrance du brevet: **29.11.2006**
(21) Numéro de dépôt: 05352003.7
(22) Date de dépôt: 31.01.2005
(51) Int. Cl.: B65F 1/00

(54) **Plate-forme modulaire démontable pour déchetterie**
Demontierbare, modulare Bühne einer Müllsammeleinrichtung
Demountable modular platform for a refuse dump

(30) Priorité: 04.02.2004 FR 0401037
(43) Date de publication de la demande: 10.08.2005
(73) Titulaire: Modulo Beton, 82000 Montauban (FR)
(72) Inventeur: Pegot-Ogier, Jean-Jacques, 82 000 Montauban (FR)
(74) Mandataire: Morelle, Guy Georges Alain

(56) Documents cités:
- FR-A- 2 687 939
- FR-A- 2 689 916
- FR-A- 2 706 791
- GB-A- 2 195 676

## Description

La présente invention se rapporte au domaine des installations destinées à la collecte des déchets, et plus particulièrement aux installations de déchargement des véhicules transportant des déchets.

Elle a pour objet un dispositif selon le préambule de la revendication 1. Un tel dispositif est décrit dans le document FR-A-2 687 939.

Les réglementations française et européenne, de plus en plus précises, obligent les collectivités locales à prévoir des sites de collecte des déchets, et notamment des décharges où les particuliers peuvent se débarrasser des déchets qui ne sont pas pris en charge par les éboueurs. Des circulaires ministérielles sont venues renforcer la vigilance pour une application stricte des règles de fonctionnement des déchetteries, leur bonne image de marque vis-à-vis du grand public étant vivement souhaitée.

Pour répondre à ces obligations, certaines collectivités consentent des investissements lourds pour réaliser des centres de collecte de grande capacité. Il s'agit en général d'équipements consistant en une plate-forme équipée de rampes inclinées permettant l'accès de véhicules de tonnage variable à des bennes de collecte placées en contrebas. Cependant, du fait de l'évolution rapide des zones urbanisées et des modifications de l'intercommunalité, il est souvent difficile de prévoir les besoins à long terme. La recherche de terrains appropriés est souvent délicate, et un choix opportun à un moment donné peut s'avérer inadapté un peu plus tard.

Pour permettre une installation provisoire sur des terrains de géométrie variable, un équipement modulaire est proposé, consistant en une plate-forme équipée de rampes inclinées, constituée d'éléments en aluminium s'assemblant en nombre variable selon la configuration souhaitée.

La demande de brevet FR-A-2 706 791 décrit quant à lui une installation réalisée également à l'aide d'éléments modulaires. Des bennes disposées les unes contre les autres, sont dotées au niveau de leur bord supérieur d'un plancher porteur qui constitue un tablier unique pouvant supporter le véhicule dont le contenu doit être déchargé.

Ces dispositifs réalisés en tôle d'acier ou d'aluminium ont une résistance limitée aux contraintes physiques, notamment aux charges élevées qu'elles ont vocation à supporter, et aux chocs durant les manoeuvres des véhicules. Les agressions chimiques peuvent également les détériorer, que ce soit du fait de déchets corrosifs ou des intempéries. Les déformations provoquées à la longue par leur usage empêchent le plus souvent leur réutilisation sur un autre site après démontage. En outre, leur installation doit se faire sur un terrain préalablement aplani et stabilisé, sous peine que les modules soient décalés et que les déformations en soient aggravées.

La présente invention a pour objectif de remédier à ces inconvénients. Elle consiste en un dispositif destiné au déchargement de déchets constitué d'une plate-forme surélevée et de rampes d'accès inclinées ayant les caractéristiques de la revendication 1.

Un tel dispositif est particulièrement adapté et facile à réaliser à partir de plaques, d'éléments portants et d'éléments d'accès préfabriqués en béton. Ses avantages sont nombreux:
- forme modulable en fonction de la capacité souhaitée et de la géométrie du terrain,
- installation sur toutes les surfaces sans chape,
- nettoyage facile,
- solidité à toute épreuve,
- démontable et remontable sans dégradation,
- transportable,
- peu onéreux.

La dalle, formée de plaques juxtaposées, a pour fonction de fournir une surface plane, horizontale et stable, sur laquelle pourront prendre appui les éléments portants et les éléments d'accès. Elle a une emprise au sol au moins aussi importante que la plate-forme qu'elle supporte. Elle peut être étendue pour supporter également des bennes de collecte des déchets. La planéité et la stabilité de la dalle sont nécessaires à la cohésion du dispositif dans son ensemble.

Les éléments portants juxtaposés sont en appui sur la dalle et forment un plan continu horizontal surélevé apte à recevoir des véhicules. On comprend aisément que pour un dispositif donné, les montant verticaux des éléments portants présentent une arrête supérieure horizontale et ont tous la même hauteur. En général, on choisira une hauteur comparable à la hauteur des bennes placées à la périphérie du dispositif, d'un modèle habituellement employé pour la collecte des déchets.

On comprend également que pour un dispositif donné les montants verticaux des éléments d'accès présentent une arrête supérieure inclinée et ont des hauteurs variables permettant d'assurer une élévation progressive et continue depuis le niveau du sol jusqu'au niveau de la plate-forme.

Le principe de base du dispositif selon l'invention étant la modularité, il est vivement recommandé que chaque type d'éléments modulaires constituant la structure du dispositif (plaques, éléments portants, éléments d'accès) soit réalisé en un nombre limité de formats, de préférence en un format unique, ledit format constituant l'unité du module. Dans ce cas, la hauteur étant fixée comme indiqué précédemment, toutes les plaques ou tous les éléments occuperont une surface donnée.

Si deux formats sont utilisés, on fera en sorte de préférence que le rapport des surfaces soit un nombre entier. Par exemple, on peut utiliser des éléments portants dont la traverse supérieure forme un carré de côté L, occupant une surface S = L² , en combinaison avec des plaques occupant une surface rectangulaire de côtés L et 1, avec L = 2 × 1, et s = S/2. De manière générale on remarque que l'existence de nombreux éléments de symétrie favorise une plus grande modularité.

Pour des raisons de résistance des matériaux il sera avantageux que les montants verticaux soient placés du côté le plus long des éléments portants ou des éléments d'accès. En coupe transversale, lesdits éléments présentent une forme en U inversé, les branches du U donnant la largeur de l'élément considéré. Lors de l'assemblage du dispositif selon l'invention, on disposera de manière avantageuse les éléments dans le même sens. On pourra par exemple disposer une rangée d'éléments alignés dans le sens de la longueur. Ces éléments, en contact par leur face en U, seront appelés "éléments consécutifs". On pourra aussi disposer une rangée d'éléments alignés dans le sens de la largeur. Ces éléments, en contact par la surface de leur montant vertical, seront appelés " éléments accolés". Bien entendu, dans le cas le plus général et selon le principe de la modularité, une plate-forme est composée de plusieurs rangées d'éléments consécutifs et accolés. Ces définitions s'étendent aux éléments de format carré. Les calculs de résistance des matériaux s'appliquent sans difficulté pour établir les dimensions optimales et limites des éléments constitutifs du dispositif selon l'invention.

Le dispositif est caractérisé par sa stabilité et sa solidité, non seulement de par les caractéristiques propres des éléments modulaires le composant, mais également du fait des moyens de liaison apportant cohésion entre les plaques, les éléments portants et les éléments d'accès. Ces moyens de liaison comprennent en particulier des moyens de calage des éléments les uns par rapport aux autres, c'est-à-dire des moyens assurant leur positionnement relatif correct et leur immobilisation dans une position donnée durant le montage du dispositif ou durant l'utilisation, et ce du fait de leur conformation propre, sans faire appel à des pièces supplémentaires. Les moyens de liaison comprennent aussi des moyens de fixation des éléments entre eux, faisant appel à des pièces supplémentaires.

Selon une caractéristique du dispositif selon l'invention, celui-ci comprend des moyens de calage vertical des plaques formant la dalle de répartition. En effet, les plaques doivent former une surface plane, de manière à ce que les éléments portants et les éléments d'accès trouvent un appui horizontal continu. Un basculement ou un déplacement dans le sens vertical d'une plaque par rapport à l'autre doit donc être évité.

Selon un mode de réalisation avantageux, dans le dispositif selon l'invention, les faces latérales en contact de deux plaques contiguës comportent une encoche horizontale formant une lumière de section polygonale dans laquelle est logé un tube de même section.

Selon une autre caractéristique du dispositif selon invention, celui-ci comprend des moyens de calage latéral des éléments portants et des éléments d'accès sur la dalle. La première fonction d'un tel calage est d'empêcher un élément de glisser latéralement. En effet, les montants latéraux doivent être positionnés sur les plaques et ne doivent pas pouvoir se dégager de cet appui.

Selon un mode de réalisation particulier, les moyens de calage latéral d'un élément portant ou d'un élément d'accès sont constitués de deux rainures pratiquées dans la dalle à l'aplomb des deux montants verticaux dudit élément, chacune desdites rainures recevant l'extrémité d'un desdits montants verticaux.

Selon un mode de réalisation préféré, les rainures ont un profil dissymétrique, leur profondeur étant moindre du côté externe dudit élément L'extrémité des montants verticaux adopte la forme complémentaire dudit profil. Un tel profil revêt un intérêt particulier lorsque l'on désire donner de la cohésion entre un ensemble d'éléments portants accolés et les plaques d'appui correspondantes comme il sera expliqué plus loin.

Grâce aux moyens de calage des plaques et des éléments décrits ci-dessus, leur positionnement correct durant le montage est facilité. Lors de l'utilisation, ils sont immobilisés, même lorsque le dispositif est soumis à des contraintes fortes.

Pour renforcer la solidité et la cohésion du dispositif selon l'invention, des moyens de fixation peuvent être mis en oeuvre. Cette fixation peut être basée sur le principe du chaînage.

Il peut être prévu d'assurer la cohésion par un moyen de fixation de deux éléments consécutifs entre eux. Par exemple lesdits moyens de fixation peuvent comprendre au moins un système composé de deux pattes rigides fixées entre elles à leurs extrémités par deux tiges filetées traversant chacune un montant vertical desdits deux éléments consécutifs. Ainsi, lesdites pattes rigides sont placées de part et d'autre des montants verticaux et à cheval sur deux montants verticaux consécutifs. Le tout est maintenu serré par des boulons vissés sur le filetage desdites tiges.

Il peut être prévu également d'assurer la cohésion par fixation de quatre éléments entre eux, à savoir une première paire d'éléments consécutifs accolée à une seconde paire d'éléments consécutifs.

Par exemple, lesdits moyens de fixation comprennent au moins un système composé de deux pattes rigides fixées entre elles à leurs extrémités par deux tiges filetées traversant chacune deux montants verticaux accolés de deux paires d'éléments consécutifs. Le tout est maintenu serré par des boulons vissés sur le filetage desdites tiges.

Dans un souci d'optimisation du dispositif et compte tenu de l'intérêt d'avoir de nombreux éléments de symétrie pour augmenter la souplesse de combinaison des éléments modulaires, et assurer une bonne cohésion de l'ensemble, le dispositif selon l'invention est avantageusement composé de plaques et d'éléments de même largeur. Selon une variante préférée, les plaques sont deux fois plus courtes que les éléments portants. Les jonctions entre éléments peuvent par ailleurs être décalées par rapport aux jonctions entre plaques, ou bien elles peuvent coïncider. De préférence, on réalise un montage mixte, dans lequel les jonctions entre éléments portants accolés coïncident avec les jonctions entre plaques, et les jonctions entre éléments portants consécutifs sont décalés par rapport aux jonctions entre plaques. Dans ce cas, les deux montants verticaux d'un élément prennent appui sur les deux bords opposés d'une ou de plusieurs plaques.

Selon encore une autre caractéristique, le dispositif selon l'invention comprend des moyens pour empêcher l'écartement des plaques formant la dalle de répartition. Cette caractéristique est d'autant plus importante quand les plaques et les éléments ont la même largeur, et qu'une rangée donnée de plaques soutient une rangée donnée d'éléments. En effet, si les plaques glissent latéralement, les éléments en appui sur celles-ci vont s'écarter, laissant apparaître des failles au niveau de la plate-forme.

Selon un mode de réalisation avantageux, les moyens pour empêcher l'écartement des plaques comprennent des moyens de calage latéral des éléments sur les plaques, associés à des moyens de fixation de deux éléments consécutifs entre eux. De tels moyens peuvent notamment être constitués par les moyens particuliers décrits précédemment, pris en combinaison. Ainsi dans ce cas, le dispositif selon l'invention comprend :
- des moyens de calage latéral d'un élément, constitués de deux rainures pratiquées dans la dalle à l'aplomb des deux montants verticaux dudit élément, lesdites rainures recevant l'extrémité desdits montants verticaux, et
- au moins un système composé de deux pattes rigides fixées entre elles à leurs extrémités par deux tiges filetées traversant chacune un montant vertical de deux éléments consécutifs.

Selon un second mode de réalisation, le dispositif selon l'invention comprend, en combinaison :
- des moyens de calage latéral d'un élément, constitués de deux rainures pratiquées dans la dalle à l'aplomb des montants verticaux dudit élément, lesdites rainures recevant l'extrémité desdits montants verticaux, et
- au moins un système de fixation composé de deux pattes rigides fixées entre elles à leurs extrémités par deux tiges filetées traversant chacune deux montants verticaux accolés de deux paires d'éléments consécutifs.

Dans ces deux modes de réalisation, il est avantageux que les rainures aient un profil dissymétrique, et que leur profondeur soit moindre du côté externe dudit élément, l'extrémité des montants verticaux adoptant la forme complémentaire dudit profil. Comme déjà indiqué, un tel profil, en coopérant avec le système de fixation tel que décrit, revêt un intérêt particulier du fait qu'elle confère une cohésion maximum entre un ensemble d'éléments portants accolés et les plaques d'appui correspondantes.

Pour permettre un montage rapide et facile, il est recommandé de disposer d'un terrain dont la surface est à peu près plane. C'est pourquoi, de préférence, la dalle de répartition est posée sur un lit de sable.

Par ailleurs, pour des raisons de sécurité des véhicules et des personnes, un garde-corps peut être installé sur le pourtour de la plate-forme. Dans ce but, les éléments portants et d'accès comportent des moyens de fixation d'un garde-corps, pouvant consister par exemple en des trous dans lesquels peuvent être fixées des balustrades.

Tout matériau résistant et indéformable peut être employé pour réaliser les modules composant le présent dispositif De manière avantageuse les plaques, les éléments portants et les éléments d'accès sont préfabriqués en béton.

Le dispositif selon l'invention est spécialement conçu pour le déchargement d'objets ou de matières à partir de la plate-forme dans des bennes posées en contrebas. La collecte de déchets apportés par des véhicules en est l'application principale. Cependant tout autre emploi nécessitant qu'un véhicule se place en surplomb par rapport à un réceptacle quelconque est également possible.

D'autres particularités et avantages de l'invention seront mieux compris à l'aide de la description et des dessins donnés à titre d'exemples non limitatifs ci-après.

La figure 1 représente une vue générale d'un dispositif de déchargement de déchets.
Les figures 2-a et 2-b illustrent en vue de dessus, deux configurations différentes d'un dispositif de déchargement comprenant une plate-forme et une ou deux rampes d'accès.
La figure 3 est une coupe longitudinale d'une rampe d'accès à une plate-forme.
La figure 4-a est une vue en coupe horizontale de quatre éléments portants, disposés en deux paires accolées d'éléments consécutifs.

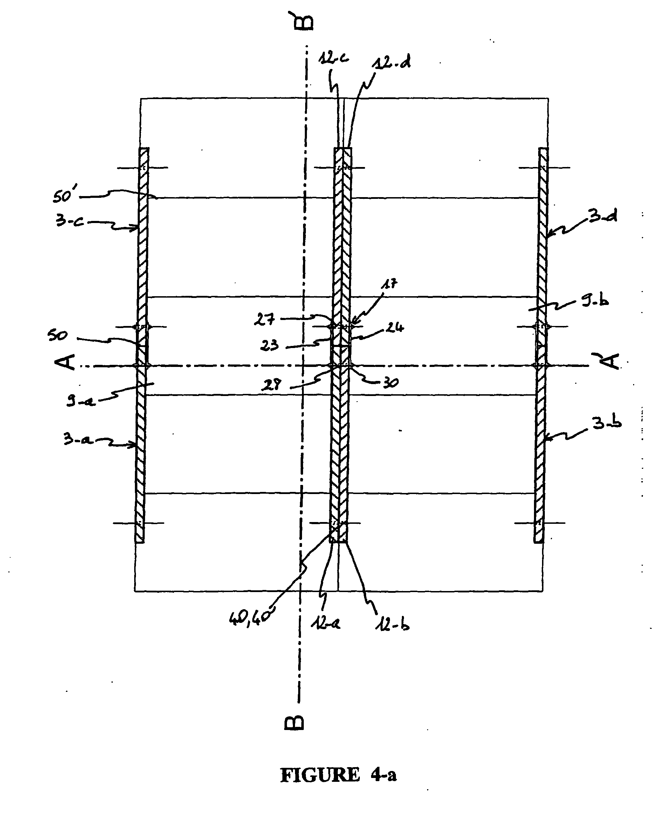

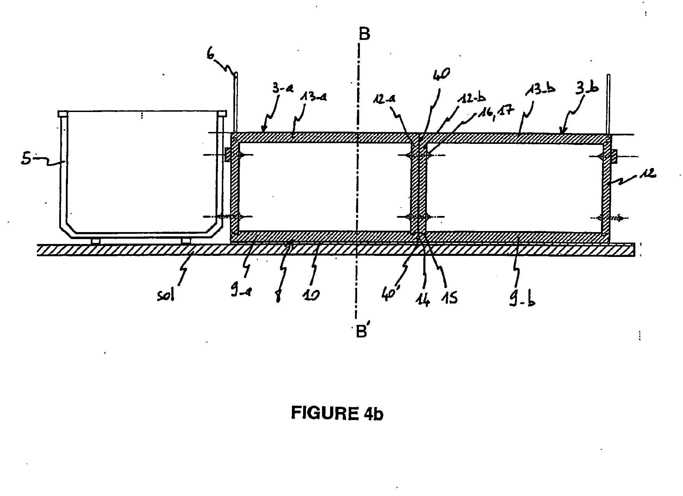

La figure 4-b est une coupe transversale de la figure 4-a selon un axe A-A'.

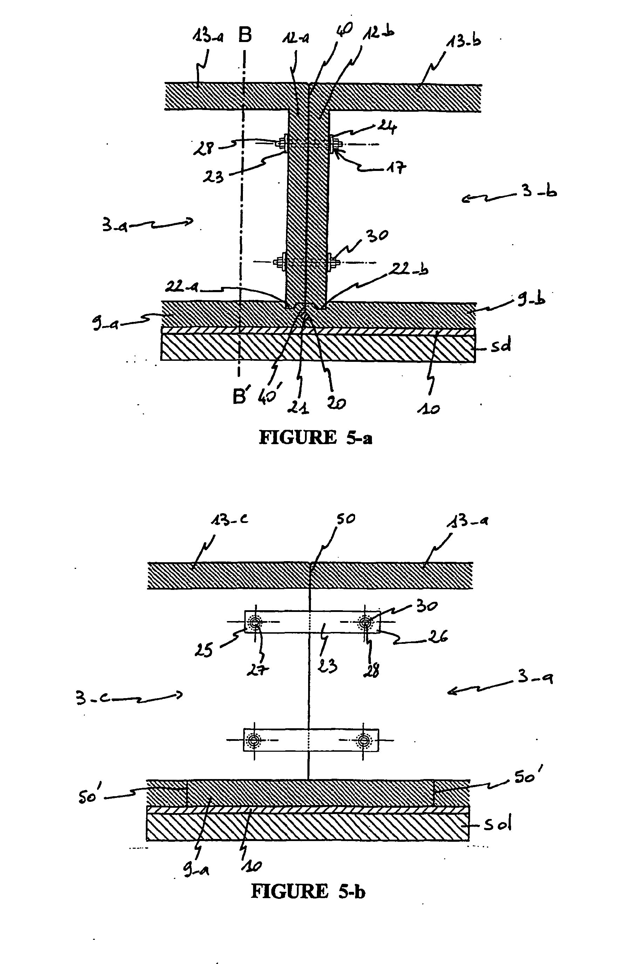

La figure 5-a est une vue agrandie de la coupe transversale de la figure 4-a selon un axe A-A', illustrant en détail une jonction entre deux éléments portants et des plaques d'appui.
La figure 5-b est une vue agrandie d'une coupe B-B' de la figure 4-a, illustrant en détail une jonction entre deux éléments portants et les plaques d'appui.

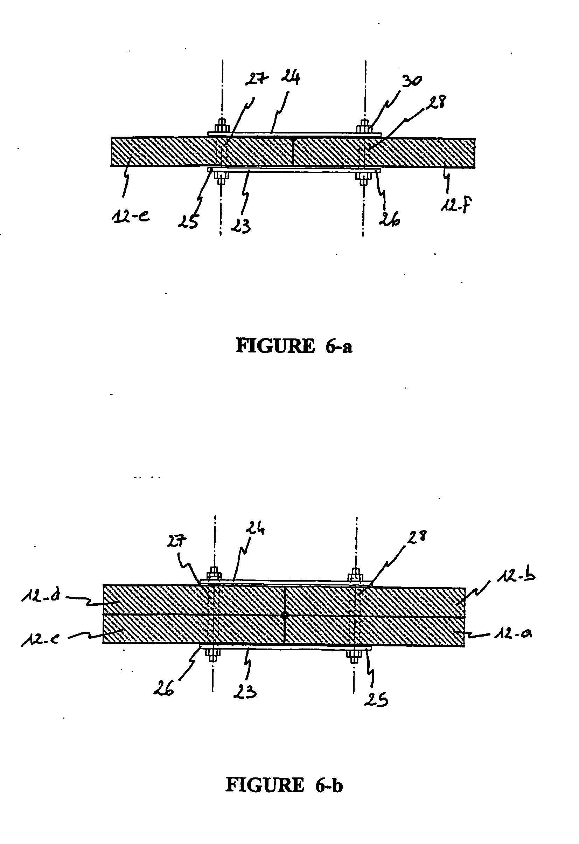

La figure 6-a représente en coupe horizontale un détail du système de fixation de deux éléments portants.
La figure 6-b représente en coupe horizontale un détail du système de fixation de quatre éléments portants.

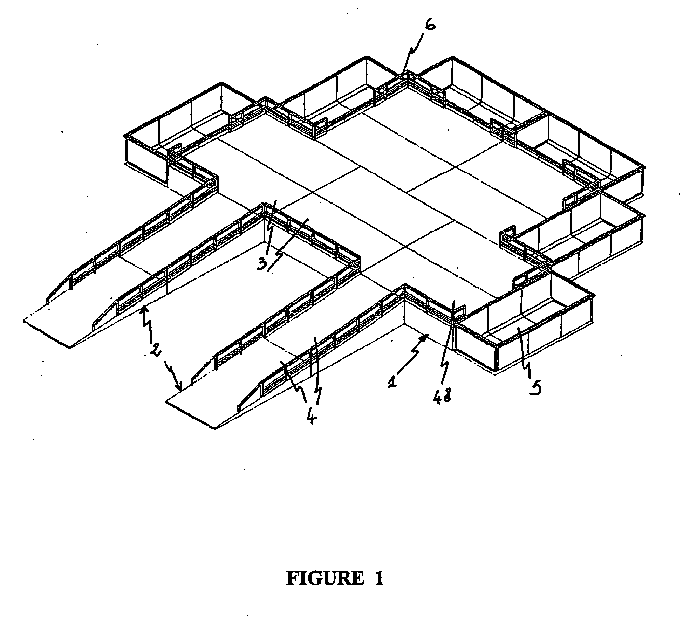

La figure 1 présente une vue en trois dimensions d'une plate-forme 1 de déchargement accessible par deux rampes d'accès 2 et équipée d'un garde-corps 6. La plate-forme surélevée 1 est accessible par deux rampes d'accès inclinées 2. Des bennes 5 servant de réceptacles aux déchets sont posées sur le sol et jouxtent la plate-forme 1 en divers endroits. La plate-forme est composée de 20 éléments portants 3 formant le plan horizontal 48. Chaque rampe 2 est composée de deux éléments d'accès 4. Un garde-corps 6 est installé sur le pourtour de la plate-forme, il s'interrompt au niveau des bennes 5 pour permettre l'approche des véhicules et le déchargement des déchets.

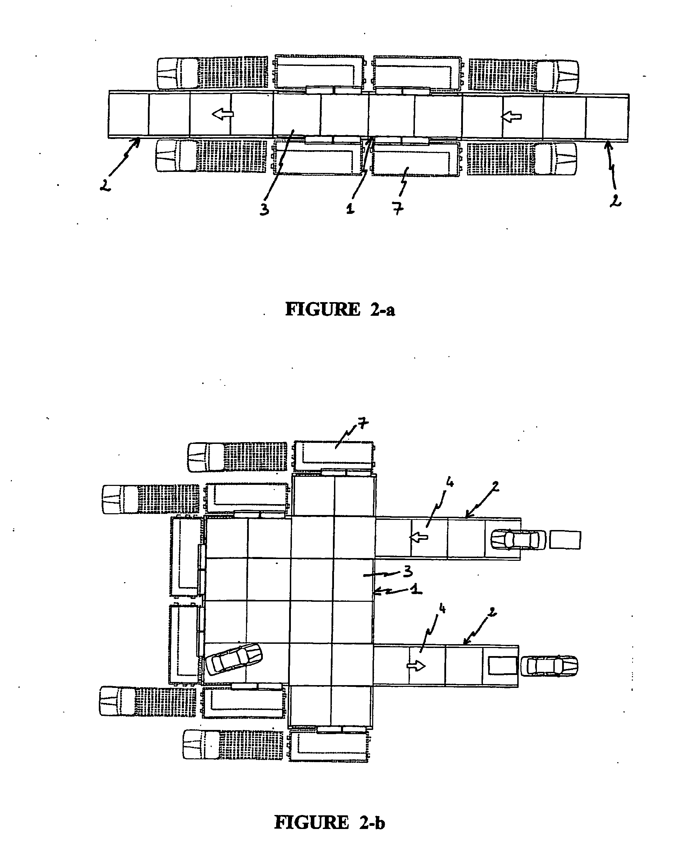

Les figures 2-a et 2-b représentent en vue de dessus, deux configurations différentes du dispositif de déchargement. Les emplacements prévus pour les bennes de collecte 5 sont matérialisés par les dalles de béton 7.

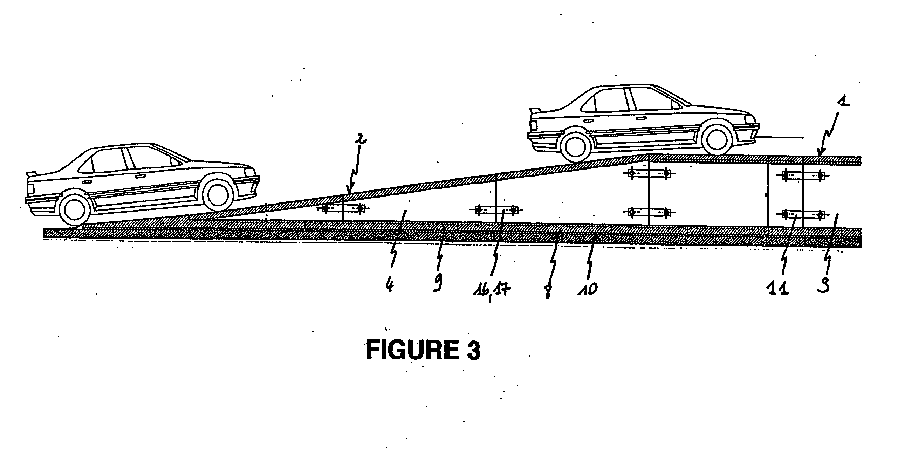

Sur la figure 3, est représentée en coupe longitudinale, une rampe 2 composée de plusieurs éléments d'accès 4, se prolongeant par le premier élément portant 3 de la plate-forme 1. Les éléments d'accès 4 et les éléments portants 3 prennent appui sur la dalle de répartition 8 composée de plusieurs plaques 9 juxtaposées sur un lit de sable 10. Les systèmes de fixation 17 sont placés à la jonction des différents éléments 3, 4.

Sur la figure 4-a apparaissent en coupe horizontale, quatre éléments portants 3, disposés en deux paires accolées d'éléments consécutifs. Les éléments portants 3 sont constitués chacun de deux montants verticaux 12 et d'une traverse supérieure horizontale 13. Les éléments 3-a et 3-b sont accolés par la surface d'un montant vertical, respectivement 12-a et 12-b, de même que les éléments 3-c et 3-d sont accolés par la surface d'un montant vertical, respectivement 12-c et 12-d. D'autre part, les éléments 3-a et 3-c sont consécutifs, de même que les éléments 3-b et 3-d. La jonction des quatre éléments portants 3 est assurée par le système de fixation 17. Ces éléments portants prennent appui totalement ou partiellement sur un jeu de dix plaques 4. La jonction longitudinale 40 entre éléments portants 3 accolés coïncide avec la jonction 40' des plaques 4. La jonction transversale 50 entre éléments portants 3 consécutifs est décalée par rapport aux jonctions 50' entre les plaques 4.

La figure 4-b représente deux éléments portants 3 accolés, en coupe transversale selon l'axe A-A'. Les éléments portants 3-a et 3-b sont constitués chacun de deux montants verticaux 12 prenant appui sur 1a dalle de répartition 8, et d'une traverse supérieure horizontale 13. Chaque élément portant 3-a, 3-b prend appui sur les deux bords opposés d'une plaque 9-a, 9-b respectivement. Les montants verticaux 12-a et 12-b sont en contact, de sorte que les traverses 13-a et 13-b des éléments portants 3-a et 3-b forment un plan horizontal surélevé continu. Sont utilisés ici différents moyens de liaisons entre les plaques 9 et les éléments portants 3 à savoir:
- des moyens de calage vertical 14 des plaques 9 formant la dalle de répartition 8;
- des moyens de calage latéral 15 des éléments portants 3 sur la dalle 8, et
- des moyens de fixation 16 entre les éléments portants 3.

Ces différents moyens de liaison sont illustrés en détail sur les figures 5-a, 5-b d'une part, et 6-a, 6-b d'autre part.

La figure 5-a illustre en coupe selon l'axe A-A', le détail d'une jonction entre des éléments portants 3 et des plaques d'appui 9. La figure 5-b est une coupe de la même jonction selon l'axe B-B'. Les faces latérales des deux plaques contiguës 9-a et 9-b sont en contact. Elles comportent une encoche horizontale 20 formant une lumière de section carrée 21 dans laquelle est logé un tube en métal de même section. Par ailleurs, deux rainures 22-a et 22-b sont pratiquées au bord des plaques 9-a et 9-b, et reçoivent l'extrémité des montants verticaux 12-a et 12-b respectivement Lesdites rainures ont un profil dissymétrique, leur profondeur étant moindre du côté externe dudit élément. L'extrémité des montants verticaux 12-a et 12-b adopte la forme complémentaire dudit profil.

La fixation des quatre éléments portants 3 entre eux est assurée par deux systèmes 17 placés à des hauteurs différentes. Un tel système 17 est représenté figure 6-b. Il est composé de deux pattes rigides 23 et 24 fixées entre elles à leurs extrémités 25 et 26 par deux tiges filetées 27 et 28. La tige 28 traverse les deux montants verticaux accolés 12-a et 12-b des deux éléments accolés 3-a et 3-b. La tige 27 traverse les deux montants verticaux accolés 12-c et 12-d des deux éléments accolés 3-c et 3-d. Des boulons 30 tiennent serrés lesdites tiges et lesdites pattes du système 17.

La figure 6-a représente un système de fixation 17 de deux éléments portants consécutifs 3, cette configuration se rencontrant à la périphérie du dispositif. Deux pattes rigides 23 et 24 sont fixées entre elles à leurs extrémités 25 et 26 par deux tiges filetées 27 et 28. La tige 28 traverse le montant vertical 12-e. La tige 27 traverse le montant vertical 12-f. Des boulons 30 tiennent serrés lesdites tiges et lesdites pattes du système 17.

## Revendications

1. Dispositif destiné au déchargement de déchets constitué d'une plate-forme surélevée (1) et de rampes d'accès inclinées (2)*,* la plate-forme surélevée (1) étant composée d'une pluralité d'éléments portants (3) juxtaposés formant le plan horizontal surélevé (48), chaque rampe d'accès inclinée (2) étant composée d'une pluralité d'élément d'accès (4), ***caractérisé en ce qu*** 'il comprend :
une pluralité de plaques juxtaposées (9) formant une dalle de répartition (8),
lesdits éléments portants (3) étant constitués de deux montants verticaux (12) prenant appui sur la dalle de répartition (8) et d'une traverse supérieure (13) horizontale,
la pluralité d'éléments d'accès (4) formant au moins un plan incliné continu depuis la dalle de répartition (8) jusqu'au plan horizontal surélevé (48), lesdits éléments d'accès (4) étant constitués de deux montants verticaux (12) prenant appui sur la dalle de répartition (8) et d'une traverse supérieure (13) inclinée, et
des moyens de liaison (11) entre les plaques (9), les éléments portants (3) et les éléments d'accès (4).

2. Dispositif selon la revendication 1, ***caractérisé en ce qu***'il comprend des moyens de calage vertical (14) des plaques (9) formant la dalle de répartition (8).

3. Dispositif selon la revendication 2, ***caractérisé en ce que*** les faces latérales en contact de deux plaques (9) contiguës comportent une encoche horizontale (20) formant une lumière (21) de section polygonale dans laquelle est logé un tube de même section.

4. Dispositif selon l'une des revendications 1 à 3, ***caractérisé en ce qu'*il** comprend des moyens de calage latéral (15) des éléments portants (3) et des éléments d'accès (4) sur la dalle (8).

5. Dispositif selon la revendication 4, ***caractérisé en ce que*** les moyens de calage latéral d'un élément portant (3) ou d'un élément d'accès (4) sont constitués de deux rainures (22-a, 22-b) pratiquées dans la dalle (8) à l'aplomb des montants verticaux (12) dudit élément, lesdites rainures recevant l'extrémité desdits montants verticaux.

6. Dispositif selon la revendication 5, ***caractérisé en ce que*** les rainures (22-a, 22-b) ont un profil dissymétrique, leur profondeur étant moindre du côté externe dudit élément, et l'extrémité des montants verticaux adopte la forme complémentaire dudit profil.

7. Dispositif selon l'une des revendications précédentes, ***caractérisé en ce qu***'il comprend des moyens de fixation (16) de deux éléments (3, 4) consécutifs entre eux.

8. Dispositif selon la revendication 7, ***caractérisé en ce que*** les moyens de fixation (16) comprennent au moins un système (17) composé de deux pattes rigides (23, 24) fixées entre elles à leurs extrémités (25, 26) par deux tiges filetées (27, 28) traversant chacune un montant vertical (12) de deux éléments (3, 4) consécutifs.

9. Dispositif selon l'une des revendications précédentes, ***caractérisé en ce qu***'il comprend des moyens de fixation (16) de quatre éléments (3, 4) entre eux, lesdits éléments étant disposés en une première paire d'éléments consécutifs accolée à une seconde paire d' éléments consécutifs.

10. Dispositif selon la revendication 9, ***caractérisé en ce que*** les moyens de fixation (16) comprennent au moins un système (17) composé de deux pattes rigides (23, 24) fixées entre elles à leurs extrémités (25,26) par deux tiges filetées (27, 28) traversant chacune deux montants verticaux (12) accolés de deux paires d'éléments (3, 4) consécutifs.

11. Dispositif selon l'une des revendications précédentes, ***caractérisé en ce que*** les plaques (9) et les éléments (3, 4) sont de même largeur.

12. Dispositif selon l'une des revendications précédentes, ***caractérisé en ce que*** les deux montants verticaux (12) d'un élément (3, 4) prennent appui sur les deux bords opposés d'une ou de plusieurs plaques (9).

13. Dispositif selon l'une des revendications précédentes, ***caractérisé en ce qu**'*il comprend des moyens pour empêcher l'écartement des plaques (9) formant la dalle de répartition (8).

14. Dispositif selon la revendication 13, ***caractérisé en ce que*** lesdits moyens pour empêcher l'écartement des plaques (9) comprennent des moyens de calage latéral (15) des éléments (3, 4) sur les plaques (9), associés à des moyens de fixation (16) desdits éléments entre eux.

15. Dispositif selon la revendication 14, ***caractérisé en ce qu'***il comprend :
- des moyens de calage latéral (15) d'un élément (3, 4), constitués de deux rainures (22-a, 22-b) pratiquées dans la dalle (8) à l'aplomb des montants verticaux (12) desdits éléments, lesdites rainures recevant l'extrémité desdits montants verticaux, et
- au moins un système de fixation (17) composé de deux pattes rigides (23, 24) fixées entre elles à leurs extrémités (25, 26) par deux tiges filetées (27, 28) traversant chacune un montant vertical (12) desdits éléments.

16. Dispositif selon la revendication 14, ***caractérisé en ce qu'*il** comprend :
- des moyens de calage latéral (15) d'un élément (3, 4), constitués de deux rainures (22-a, 22-b) pratiquées dans la dalle (8) à l'aplomb des montants verticaux (12) dudit élément, lesdites rainures recevant l'extrémité desdits montants verticaux, et
- au moins un système de fixation (17) composé de deux pattes rigides (23, 24) fixées entre elles à leurs extrémités (25, 26) par deux tiges filetées (27, 28) traversant chacune deux montants verticaux (12) accolés de deux paires d'éléments consécutifs.

17. Dispositif selon l'une des revendications précédentes, ***caractérisé en ce que*** la dalle de répartition (8) est posée sur un lit de sable (10).

18. Dispositif selon l'une des revendications précédentes, ***caractérisé en ce que*** les éléments (3, 4) comportent des moyens de fixation d'un garde-corps (6).

19. Dispositif selon l'une quelconque des revendications précédentes, ***caractérisé en ce que*** les plaques (9), les éléments portants (3) et les éléments d'accès (4) sont préfabriqués en béton.

## Claims

1. Apparatus intended for discharging refuse and comprising a raised platform (1) and inclined access ramps (2), the raised platform (1) being composed of a plurality of juxtaposed supporting units (3) forming the raised horizontal plane (48), each inclined access ramp (2) being composed of a plurality of access units (4), **characterised in that** it includes:
a plurality of juxtaposed plates (9) which form a distribution slab (8), said supporting units (3) comprising two vertical posts (12) supported on the distribution slab (8) and one upper horizontal cross-bar (13),
the plurality of access units (4) forming at least one continuous inclined plane extending from the distribution slab (8) to the raised horizontal plane (48), said access units (4) comprising two vertical posts (12) supported on the distribution slab (8) and one upper inclined cross-bar (13), and
connection means (11) between the plates (9), the supporting units (3) and the access units (4).

2. Apparatus according to claim 1, **characterised in that** it includes means (14) for vertically wedging the plates (9) which form the distribution slab (8).

3. Apparatus according to claim 2, **characterised in that** the lateral faces in contact with two contiguous plates (9) have a horizontal notch (20) forming an aperture (21) with a polygonal cross-section in which is accommodated a tube of the same cross-section.

4. Apparatus according to one of claims 1 to 3, **characterised in that** it includes means (15) for laterally wedging the supporting units (3) and the access units (4) on the slab (8).

5. Apparatus according to claim 4, **characterised in that** the means for laterally wedging a supporting unit (3) or an access unit (4) comprise two grooves (22a, 22b) which are provided in the slab (8) perpendicular to the vertical posts (12) of said unit, said grooves accommodating the end of said vertical posts.

6. Apparatus according to claim 5, **characterised in that** the grooves (22a, 22b) have an asymmetrical profile, their depth being less than the external side of said unit, and the end of the vertical posts takes the complementary form of said profile.

7. Apparatus according to one of the preceding claims, **characterised in that** it includes means (16) for securing two consecutive units (3, 4) to each other.

8. Apparatus according to claim 7, **characterised in that** the securing means (16) include at least one system (17) composed of two rigid lugs (23, 24) secured to each other at their ends (25, 26) by two threaded rods (27, 28), which each traverse a vertical post (12) of two consecutive units (3, 4).

9. Apparatus according to one of the preceding claims, **characterised in that** it includes means (16) for securing four units (3, 4) to one another, said units being disposed in a first pair of consecutive units coupled with a second pair of consecutive units.

10. Apparatus according to claim 9, **characterised in that** the securing means (16) include at least one system (17) composed of two rigid lugs (23, 24) secured to each other at their ends (25, 26) by two threaded rods (27, 28), each traversing two vertical posts (12) coupled with two pairs of consecutive elements (3, 4).

11. Apparatus according to one of the preceding claims, **characterised in that** the plates (9) and the units (3, 4) have the same width.

12. Apparatus according to one of the preceding claims, **characterised in that** the two vertical posts (12) of one unit (3, 4) are supported on the two opposite edges of one or more plates (9).

13. Apparatus according to one of the preceding claims, **characterised in that** it includes means for preventing the plates (9), which form the distribution slab (8), from moving away from one another.

14. Apparatus according to claim 13, **characterised in that** said means for preventing the plates (9) from moving away from one another include means (15) for laterally wedging the units (3, 4) on the plates (9), said wedging means being associated with means (16) for securing said units to one another.

15. Apparatus according to claim 14, **characterised in that** it includes:
- means (15) for laterally wedging a unit (3, 4), comprising two grooves (22a, 22b) which are provided in the slab (8) perpendicular to the vertical posts (12) of said units, said grooves accommodating the end of said vertical posts, and
- at least one securing system (17) composed of two rigid lugs (23, 24) secured to each other at their ends (25, 26) by two threaded rods (27, 28), which each traverse a vertical post (12) of said units.

16. Apparatus according to claim 14, **characterised in that** it includes:
- means (15) for laterally wedging a unit (3, 4), comprising two grooves (22a, 22b) which are provided in the slab (8) perpendicular to the vertical posts (12) of said unit, said grooves accommodating the end of said vertical posts, and
- at least one securing system (17) composed of two rigid lugs (23, 24) secured to each other at their ends (25, 26) by two threaded rods (27, 28), which each traverse two vertical posts (12) coupled with two pairs of consecutive units.

17. Apparatus according to one of the preceding claims, **characterised in that** the distribution slab (8) is laid on a bed of sand (10).

18. Apparatus according to one of the preceding claims, **characterised in that** the units (3, 4) have means for securing a guard-rail (6).

19. Apparatus according to any of the preceding claims, **characterised in that** the plates (9), the supporting units (3) and the access units (4) are prefabricated from concrete.

## Patentansprüche

1. Vorrichtung zur Müllentladung, gebildet aus einer erhöhten Bühne (1) und geneigten Zugangsrampen (2), wobei die erhöhte Bühne (1), die aus einer Mehrzahl von nebeneinander angeordneten Tragelementen (3) zusammengesetzt ist, die die horizontale überhöhte Ebene (48) bilden, und jede geneigte Zugangsrampe (2) aus einer Mehrzahl aus Zugangselementen (4) zusammengesetzt ist,
**dadurch gekennzeichnet ,**
**dass** sie aufweist:
eine Mehrzahl an nebeneinander angeordneten Tafeln (9), die eine Verteilplatte (8) bilden, und
die Tragelemente (3) aus zwei vertikalen Verstrebungen (12) gebildet sind, die sich auf der Verteilplatte (8) und einer oberen horizontalen Querverstrebung (13) abstützen,
wobei die Mehrzahl an Zugangselementen (4) zumindest eine geneigte Ebene bildet, die sich von der Verteilplatte (8) bis zur horizontalen erhöhten Ebene (48) erstreckt, und die Zugangselemente (4) aus zwei vertikalen Verstrebungen (12) gebildet sind, die sich auf der Verteilplatte (8) und einer oberen geneigten Querverstrebung (13) abstützen, und
Verbindungsmitteln (11) zwischen den Tafeln (9), den Tragelementen (3) und den Zugangselementen (4).

2. Vorrichtung nach Anspruch 1,
**dadurch gekennzeichnet ,**
**dass** sie Mittel (14) zur Vertikaleinstellung der Tafeln (9), die die Verteilplatte (8) bilden, aufweist.

3. Vorrichtung nach Anspruch 2,
**dadurch gekennzeichnet ,**
**dass** die Seitenflächen, die mit den angrenzenden Tafeln (9) in Berührung sind, eine horizontale Einkerbung (20) aufweisen, die eine Öffnung (21) mit polygonalem Querschnitt bildet, in die ein Rohr gleichen Querschnitts eingesetzt ist.

4. Vorrichtung nach einem der Ansprüche 1 bis 3,
**dadurch gekennzeichnet ,**
**dass** sie Mittel (15) zur Seiteneinstellung der Tragelemente (3) und der Zugangselemente (4) auf der Platte (8) aufweist.

5. Vorrichtung nach Anspruch 4,
**dadurch gekennzeichnet ,**
**dass** die Mittel zur Seiteneinstellung eines Tragelements (3) oder eines Zugangselements (4) aus zwei Rillen (22-a, 22-b) gebildet sind, die in der Platte (8) senkrecht zu den vertikalen Verstrebungen (12) des Elements ausgebildet sind, wobei die Rillen das Ende der vertikalen Verstrebungen aufnehmen.

6. Vorrichtung nach Anspruch 5,
**dadurch gekennzeichnet ,**
**dass** die Rillen (22-a, 22-b) ein asymmetrisches Profil aufweisen und deren Tiefe an der Außenseite des Elements geringer ist, und das Ende der vertikalen Verstrebungen die Komplementärform des Profils annimmt.

7. Vorrichtung nach einem der vorhergehenden Ansprüche,
**dadurch gekennzeichnet ,**
**dass** sie Befestigungsmittel (16) der zwei nachfolgenden Elemente (3, 4) zwischen ihnen aufweist.

8. Vorrichtung nach Anspruch 7,
**dadurch gekennzeichnet ,**
**dass** die Befestigungsmittel (16) zumindest ein System (17) aufweisen, das aus zwei starren Klammern (23, 24) zusammengesetzt ist, die dazwischen an ihren Enden (25, 26) durch zwei Gewindebolzen (27, 28) befestigt sind, die jeweils eine vertikale Verstrebung (12) der zwei nachfolgenden Elemente (3, 4) durchdringen.

9. Vorrichtung nach einem der vorhergehenden Ansprüche,
**dadurch gekennzeichnet ,**
**dass** sie Befestigungsmittel (16) der vier Elemente (3, 4) zwischen ihnen aufweist, wobei die Elemente in einem ersten Paar nachfolgender Elemente angeordnet sind, das mit einem zweiten Paar nachfolgender Elemente verbunden ist.

10. Vorrichtung nach Anspruch 9,
**dadurch gekennzeichnet ,**
**dass** die Befestigungsmittel (16) zumindest ein System (17) aufweisen, das aus zwei starren Klammern (23, 24) zusammengesetzt ist, die dazwischen an ihren Enden (25, 26) durch zwei Gewindebolzen (27, 28) befestigt sind, die jeweils zwei vertikale Verstrebungen (12) durchdringen, die mit zwei Paaren nachfolgender Elemente (3, 4) verbunden sind.

11. Vorrichtung nach einem der vorhergehenden Ansprüche,
**dadurch gekennzeichnet ,**
**dass** die Tafeln (9) und die Elemente (3, 4) die gleiche Größe aufweisen.

12. Vorrichtung nach einem der vorhergehenden Ansprüche,
**dadurch gekennzeichnet ,**
**dass** die zwei vertikalen Verstrebungen (12) eines Elements (3, 4) sich auf den zwei gegenüberliegenden Kanten einer oder mehrerer Tafeln (9) abstützen.

13. Vorrichtung nach einem der vorhergehenden Ansprüche,
**dadurch gekennzeichnet ,**
**dass** sie Mittel zum Verhindern der Spreizung der Tafeln (9), die die Verteilplatte (8) bilden, aufweist.

14. Vorrichtung nach Anspruch 13,
**dadurch gekennzeichnet ,**
**dass** die Mittel zum Verhindern der Spreizung der Tafeln (9) Mittel (15) zur Seiteneinstellung der Elemente (3, 4) auf den Tafeln (9) aufweisen, die dazwischen an Befestigungsmitteln (16) der Elemente angebunden sind.

15. Vorrichtung nach Anspruch 14,
**dadurch gekennzeichnet ,**
**dass** sie aufweist:
- Mittel (15) zur Seiteneinstellung eines Elements (3, 4), die aus zwei Rillen (22-a, 22-b) gebildet sind, die in der Platte (8) senkrecht zu den vertikalen Verstrebungen (12) der Elemente ausgebildet sind, wobei die Rillen das Ende der vertikalen Verstrebungen aufnehmen, und
- zumindest ein Befestigungssystem (17), das aus zwei starren Klammern (23, 24) gebildet ist, die dazwischen an ihren Enden (25, 26) durch zwei Gewindebolzen (27, 28) befestigt sind, die jeweils eine vertikale Verstrebung (12) der Elemente durchdringen.

16. Vorrichtung nach Anspruch 14,
**dadurch gekennzeichnet ,**
**dass** sie aufweist:
- Mittel (15) zur Seiteneinstellung eines Elementes (3, 4), die aus zwei Rillen (22-a, 22-b) gebildet sind, die in der Platte (8) senkrecht zu den vertikalen Verstrebungen (12) des Elements ausgebildet sind, wobei die Rillen das Ende der vertikalen Verstrebungen aufnehmen, und
- zumindest ein Befestigungssystem (17), das aus zwei starren Klammern (23, 24) gebildet ist, die dazwischen an ihren Enden (25, 26) durch zwei Gewindebolzen (27, 28) befestigt sind, die jeweils zwei vertikale Verstrebungen (12) durchdringen, die mit zwei Paaren nachfolgender Elemente verbunden sind.

17. Vorrichtung nach einem der vorhergehenden Ansprüche,
**dadurch gekennzeichnet ,**
**dass** die Verteilplatte (8) auf einer Sandbettung (10) angeordnet ist.

18. Vorrichtung nach einem der vorhergehenden Ansprüche,
**dadurch gekennzeichnet ,**
**dass** die Elemente (3, 4) Befestigungsmittel eines Schutzgeländers (6) aufweisen.

19. Vorrichtung nach einem der vorhergehenden Ansprüche,
**dadurch gekennzeichnet ,**
**dass** die Tafeln (9), die Tragelemente (3) und die Zugangselemente (4) aus Beton vorgefertigt sind.
